# EUROPEAN PATENT APPLICATION

(11) **EP 2 983 088 A1**
(43) Date of publication of application: **10.02.2016**
(21) Application number: 14002750.9
(22) Date of filing: 06.08.2014
(51) Int. Cl.: G06F 12/14

(54) **Memory protection unit**

(71) Applicant: Airbus Defence and Space GmbH, 85521 Ottobrunn (DE)
(72) Inventor: Münch, Daniel J., 81241 München (DE); Paulitsch, Michael, 85521 Ottobrunn (DE)

(57) **Abstract**

A bridge unit (100) for transmitting a data packet between an I/O device (400) and a processing unit (200) is described. The bridge unit comprises a first port (110) configured to send and receive a data packet using a first address space and a second port (120) configured to send and receive a data packet using a second address space. One port of the first port (110) and second port (120) is configured for being connected to the I/O device (400) and the other port is configured for being connected to the processing unit (200). The bridge unit (100) comprises a control unit (130) which is adapted to transmit a data packet from one of the first port (110) and the second port (120) to the other port. The control unit (130) is configured to apply a set of rules comprising at least one rule to the data packet. The control unit (130) is configured to verify an identifier, ID, of the I/O device when applying the set of rules to the data packet and to dismiss the data packet if no rule of the set of rules applies to the data packet.

## Description

### Field of the invention

The invention relates to a bridge unit for transmitting a data packet between an I/O device and a processing unit and to a computer device with such a bridge unit.

### Technical background

Safety-critical systems consolidating multiple functionalities of different criticality may require that these functionalities cannot interfere with each other.

Like in other fields of electronics, there may be a demand in avionics to implement more and more functionality in one computing device or processing unit. This is accompanied by the trend of higher integration of functionality onto one (multi-core) computing platform to save space, weight and/or power consumption. The trend goes even further to the integration of functionality of different criticality levels on the same platform to so called mixed-criticality systems. The coexistence of functionalities of different criticality levels on one shared (multi-core) platform requires that these functionalities cannot interfere with other functionalities or with the entire system in case of a failure. To handle this interference issue, temporal separation and spatial separation may be required to enable safety and security properties.

One central architectural system part is the Input/Output (I/O) subsystem, because almost every function needs I/O for its operation. In this case, temporal separation means having an enforced separation in the time domain. For example, it is guaranteed that a device gets a certain bandwidth or limited latency over the interconnection. Spatial separation means having isolation in the address space domain. For example, it is enforced that an I/O device can only write into a distinct address range or memory of a distinct functionality or application. This prevents an I/O device from unwanted overwriting of application data associated with another I/O device caused by an erroneous software or I/O device. Such a situation could lead to a complete system failure.

Spatial separation may require that this approach is applied with the least possible impact on performance in computer devices, for example mixed criticality embedded real-time systems. These systems typically do not provide adequate means for spatial separation like an Input/Output Memory Management Unit (IOMMU).

In virtual environments, hardware-based I/O virtualization techniques are used. Virtualized or partitioned systems consist of several virtual machines or application partitions running on a physical computing platform managed by a virtual machine manager or Hypervisor (HV). One advantage of the hardware-based I/O virtualization approach is an I/O sharing concept providing near native performance with low overhead while still granting separation. The idea is to use memory mapped I/O like PCIe and offload the virtualization handling to hardware. In a second step, the offloaded virtualization provides a Physical Function (PF) (management interface) and several Virtual Functions (VFs) interfaces (application interfaces). The PF is directly mapped to the control partition or the HV. The VFs are directly mapped to the corresponding application partition. As a third step, already available means for memory management like Memory Management Unit (MMU) and IOMMU ensure the spatial separation. Transactions from Central Processing Unit (CPU) to I/O are also called Programmed I/O (PIO). An MMU separates these PIO transactions like in case of conventional memory. In contrast to this, transactions from I/O to CPU are also called Direct Memory Access (DMA). An IOMMU separates DMA transactions.

US 7,809,923 describes direct memory access address translation in an input/output memory management unit.

US 8,631,212 describes an input/output memory management unit with protection mode for preventing memory access by I/O devices.

EP 2 704 022 A2 describes a computer system with a multitude of central processing units, CPUs, which are interconnected with each other via non-transparent bridges.

### Summary of the invention

It may be seen as an object of the invention to provide a portable, maintainable approach with high-performance for spatial separation for computer systems, in particular for mixed-criticality embedded real-time systems with minimal impact on performance.

A bridge unit and a computer device according to the independent claims are provided. Embodiments of the invention are set out in the dependent claims and in the following description.

According to a first aspect, a bridge unit for transmitting a data packet between an I/O device and a processing unit is provided. The bridge unit comprises a first port configured to send and receive a data packet using a first address space and a second port configured to send and receive a data packet using a second address space. One port of the first port and second port is configured for being connected to the I/O device and the other port is configured for being connected to the processing unit. The bridge unit comprises a control unit which is adapted to transmit a data packet from one of the first port and the second port to the other port. The control unit is configured to apply a set of rules comprising at least one rule to the data packet. The control unit is further configured to verify an identifier, ID, of the I/O device when applying the set of rules to the data packet and to dismiss the data packet if no rule of the set of rules applies to the data packet.

The I/O device may for example be a co-processor, hardware accelerator or extension or plug-in card of a computer device or any other external device which is configured for data exchange (receiving and transmitting data) with the processing unit of the computer device.

The control unit may in particular be configured to dismiss a data packet (which could in particular be block or reject a data packet, or, generally, not letting a data packet pass) in case no rule of the set of rules applies to this data packet. Thus, as a default rule, the bridge unit dismisses a data packet and forwards it only in case that a rule applies to the data packet (white list approach). Alternatively, a black list approach may be used (allowing any data packet and dismiss only data packets which apply to at least one rule). However, the white list approach may be advantageously in the technical field of security critical applications.

Applying a rule to a data packet means that the rule contains several conditions or constrictions and the data packet is analyzed in view of these conditions. If all conditions of one rule are met, this rule applies to the respective data packet.

For example, one rule may contain the ID of an I/O device, an address of the first address space and an address of the second address space. The rules of the control unit are applied to a data packet and the source ID (identifier of the I/O device which transmitted a data packet), the address of the data packet from the first address space, and the address of the second address space are checked whether or not the values of these parameters comply with a rule.

Similarly, the control unit may apply a rule for data packets sent from the processing unit to an I/O device, whereas the target ID and not the source ID is checked by the control unit. Or in another case, target ID and source ID both are checked. In addition, the bridge unit can do other checks as well. For example, another check could be a rate or bandwidth limitation for a source ID or a link between a source ID and a target ID or target address. The bridge unit may further or alternatively be configured such that a set of rules is applied to control or limit the bandwidth or transfer rate of an I/O device or a multitude of I/O devices from or to a target.

The processing unit may be configured to execute a multitude of processes parallel or concurrently. In such a case, every process may be assigned to a specific address space (memory section) of a memory unit. Any process shall only write data to the assigned address space in order not to compromise data of other processes.

The processing unit may be connected to one or more I/O devices which may transmit data to the processing unit. When transmitting data from an I/O device to the processing unit, the data are supposed to be written to the assigned address space only. In case an I/O device writes data to an address space of another process, the safety and security of a computer device may be compromised.

The control unit configured as described above improves the safety and security of a computer device as it may prevent that an I/O device sends data packets to an address of the processing unit which is not allowed to be used by this I/O device. In the other direction of data transmission (from the processing unit to the I/O device), the control unit prevents sending data packets by the processing unit to an I/O device which is not authorized to receive the respective data packet.

Thus, the bridge unit as described above and hereinafter may prevent that a data transmission from an I/O device to a processing unit or vice versa is compromised, for example by writing data into a protected address space or into an address space of another process handled by the processing unit. The bridge unit may further prevent transmitting data packets from the processing unit to an I/O device which is not supposed to receive a specific data packet.

In other words, the bridge unit may ensure that an I/O device writes data into an address space assigned to this I/O device by checking the source ID of the originating I/O device and the target address space of the processing unit (in case the I/O device transmits data to the processing unit) and that an I/O device reads or receives data from an assigned address space of the processing unit by checking the target ID of the receiving I/O device and the source address space of the processing unit (in case the I/O device receives data from the processing unit).

According to an embodiment of the invention, the control unit is further configured to verify an address relating to the first address space and an address relating to the second address space when applying the set of rules to the data packet.

According to a further embodiment of the invention, the bridge unit is a non-transparent bridge.

In case of a data transmission from the I/O device to the processing unit, the data packet transmitted by the I/O device is addressed to an address of the first interface of the bridge unit and the bridge unit translates this address to an address of the second interface and transmits it to the processing unit. Thus, the I/O device does not use an address of the processing unit when transmitting a data packet but an address of the first interface of the bridge unit and vice versa.

According to a further embodiment of the invention, the control unit is configured to masquerade an address of the first address space.

Thus, the control unit is configured to manage or handle one or more connections between an I/O device and the processing unit, wherein the connections allow bidirectional data packet exchange as the control unit assigns a first address to a second address such that returning data packets addressed to a second address are assigned to the corresponding first address.

According to a further embodiment of the invention, the control unit is configured to apply a second set of rules comprising at least one rule to an interrupt signal received at one of the first and second interface.

Thus, the control unit may prevent that the processing unit receives counterfeit or falsified interrupt signals which may compromise the proper functioning of the processing unit.

The second set of rules may comprise similar rules as the first set of rules, in particular similar rule parameters like source ID of the originating I/O device.

The bridge unit as described above and hereinafter may be regarded as an Input/Output Memory Protection Unit (IOMPU) which provided spatial separation of address spaces in a computer device. In one embodiment, the IOMPU is based on non-transparent bridging technology providing spatial separation. This allows upgrading spatial separation to a computer device which does not comprise other means for memory management. Furthermore, the IOMPU offers a platform independent, reusable and standardized solution to connect shareable I/O to a host platform (Intel, ARM, PowerPC, for example) while providing spatial separation. The IOMPU may have additional advantages of the earlier spatial separation in the I/O interconnect, the more encapsulated storage of the rule set and the fact that it is a standardized and non-proprietary platform-dependent spatial separation solution.

The bridge unit as described above and hereinafter may in particular and advantageously be used in mixed-criticality embedded real-time systems that do not provide adequate means for spatial separation.

According to a further aspect of the invention, a computer device is provided. The computer device comprises a processing unit, an I/O device configured for exchanging data packets with the processing unit, a switching unit configured for connecting the I/O device to the processing unit, and a bridge unit as described above and hereinafter. The bridge unit is arranged between the switching unit and the processing unit and is configured for verifying data packets transmitted from one of the I/O device and the processing unit to the other one of the I/O device and the processing unit.

The bridge unit used in the computer device may improve safety and security of the computer device as the bridge unit with the control unit and the respective set of rules prevents the I/O device from writing data into an address space of the processing unit assigned to another process or I/O device and may further prevent the I/O device from receiving data which are supposed not to be transmitted to this I/O device.

According to an embodiment of the invention, the processing unit comprises a first port and a second port, wherein the first port is configured to perform configuration transaction and wherein the second port is configured to perform data transaction.

The first port is in particular configured to transmit configuration data to the bridge unit and to the I/O device and the second port is in particular configured to receive and transmit data packets from or to the I/O device.

Such a separation of configuration transactions and data transactions may improve the safety and security of the computer device as the safety and security measures may particularly focus on the data transactions.

Configuration transactions are transactions from the processing unit to an I/O device for configuring the I/O device for data transaction with the processing unit. For example, before a data transaction, the I/O device requires assignment of an ID and an address space, which is done via configuration transactions between the I/O device and the processing unit. In other words, the configuration transactions establish a connection between the I/O device and the processing unit. After establishing this connection, the I/O device may transmit data to the processing unit via data transactions.

According to a further embodiment of the invention, the switching unit is configured to separate configuration transactions from data transactions and to transmit only configuration transactions from the first port or from and to the first port of the processing unit and only data transactions to the second port or from and to the second port of the processing unit.

According to a further embodiment of the invention, the bridge unit is arranged between the switching unit and the second port of the processing unit.

Thus, the bridge unit controls data transactions only wherein configuration transactions are not controlled by the bridge unit in this embodiment.

As configuration transactions can be transmitted to the I/O device and to the bridge unit, these can be configured after an initialization of the computer device or of the I/O device. In particular if the bridge unit is configured in a default state to not forward any data packet, it may be required to separate data and configuration transactions such that a configuration is permitted even in the default state of the bridge unit.

According to a further embodiment of the invention, the switching unit is configured to replace a source ID of a data packet received from the I/O device with an ID of an interface of the switching unit connected to the I/O device.

The switching unit may comprise a multitude of interfaces for connecting to a multitude of I/O devices, respectively. In this embodiment, the switching unit replaces the source ID of a data packet with an ID of the interface at which the switching unit received a data packet.

Thus, even if a compromised I/O device transmits a data packet with a falsified source ID, the switching unit replaces this source ID with an ID of the interface connected to the I/O device such that a response packet is sent to the respective interface of the switching unit and not to the falsified source ID.

According to a further embodiment of the invention, the computer device further comprises a second bridge unit as described above and hereinafter, wherein the second bridge unit is arranged between the I/O device and the switching unit.

The second bridge unit enables monitoring the data flow or data packets between the I/O device and the switching unit. Thus, a second stage of data packet monitoring is added to the computer device which may further improve the safety and security of the computer device.

According to a further embodiment of the invention, the second bridge unit is configured to apply a set of rules to data packets sent from one of the I/O device to the switching unit to the other one.

According to a further embodiment of the invention, the second bridge unit is configured to be provided with a default set of rules after an initialization of the computer device such that a configuration transaction from the processing unit to the I/O device is permitted.

The default set of rules is required for enabling an initial configuration after initialization of the computer device.

According to a further embodiment of the invention, the computer device further comprises a multitude of second I/O devices, wherein any one of the multitude of second I/O devices is connected to the switching unit via a third bridge unit as described above and hereinafter.

According to a further embodiment of the invention, one of the third bridge units connected to one of the second I/O devices is configured such that a set of rules is applied to a data packet originated from one of the other second I/O devices.

In this embodiment, a data flow from one I/O device of the second I/O devices to another I/O device can be monitored by the respective bridge units if the data flow is directly established between the respective I/O devices without transmitting the data packets to the processing unit firstly which, in a subsequent step, transmits the data to the target I/O device. This embodiment may in particular be advantageous if the I/O devices are configured for direct memory access, DMA.

In the following, one embodiment of the invention is described using a specific computer device for illustrative purpose only and not intended for limiting the scope of the claims. The following embodiment is described with reference to the PCIe standard (peripheral component interconnect, PCI, express).

The background of the IOMPU concept (bridge unit and computer devices as described herein) is hardware-based I/O virtualization in embedded mixed-criticality real-time systems. The system lacks an IOMMU or has an IOMMU which is not able to distinguish multiple PCIe devices or PCIe devices with multiple functions. The presented concept is scalable to multiple devices and multiple devices with multiple functions. For the ease of explanation and evaluation, we consider a DMA-capable and bus-mastering capable shared PCIe card with two functions or application interfaces. This system with a PCIe card has a single connection from the PCIe card to the system which is not separated. Target is to enforce and to control the spatial separation and isolation of these two application interfaces of the PCIe card in this system. Further constraints are the usage of Commercial Off-The-Shelf (COTS) components, portability and maintainability (using a uniform and standardized interface) which is needed for products with low piece numbers / volume and long life cycles like aircraft. Further assumptions are a static system configuration. The reason for this, is the common understanding in industry that a safety-oriented and security oriented development (like in avionics) prioritize determinism, predictability and reduced complexity over dynamic flexibility. This development approach may ease the effort of the required assurance or certification process of a development. Having an IOMMU or a unit with a similar function may be essential if DMA is used. One reason for DMA is to achieve high performance and low latency. Another reason is that temporal separation may require DMA.

Embedded systems typically lack an IOMMU or have an IOMMU with limited functionality that is not capable to meet the required separation of management interface and application interfaces.

The idea of the IOMPU concept is to use a dedicated component being in charge to perform the spatial separation. This component is called IOMPU in the context of this description. A typical computing system may be a system-on-chip. Such a computing system cannot access internal busses and networks-on-chip directly. However, the spatial separation does not need to be performed shortly before the system memory, it can also be performed much earlier in the I/O interconnect. Therefore, the memory-mapped I/O interconnect like PCIe is ripped up and intercepted by the IOMPU. Managing the spatial separation in the I/O interconnect comes with a particular advantage. Since I/O interconnects like PCIe are standardized, such an IOMPU solution is reusable, portable and architecture-independent. It can be used in any computing system supporting the standardized I/O interconnect. In case of PCIe, a lot of architectures are covered, for example among others Intel, ARM, and PowerPC.

The presented IOMPU concept employs and extends the non-transparent bridge, NTB, technology by dividing address space in two parts and by controlling the address remapping through checking the origin of transactions and deciding to allow or to block the transaction.

The first item of the concept is to divide the single connection and the single address space between the PCIe card and the host system into two connections and two separated (bus) address spaces or parts. This assumes that the computing system has at least two dedicated (bus) address spaces. In context of PCIe this means two root ports or two PCIe hierarchies. This is an easily accomplishable prerequisite, since almost every computing system fulfils this, regardless of the platform architecture (Intel, ARM, PowerPC). Most systems offer more than one root port or PCIe hierarchy nowadays.

The next item of the concept is to connect these two separated (bus) address spaces by an NTB again. By its nature, an NTB has the property that it blocks all transactions by default. An NTB does not look like a usual bridge to the two systems. Each side of the bridge looks rather as an endpoint to both address spaces. Without any further configuration or means no transaction can pass the bridge.

A further item of the concept is to use one address space or part exclusively for management and control without admitting DMA memory transactions. For example, this can be achieved by deactivating memory space and the bus mastering property of a root port or uplink port. An additional means is to deactivate the ingoing window in the root port from the I/O interconnect to the internal system-on-chip interconnect.

Another item of the concept is to allow explicitly DMA write and DMA reads initiated by these two application interfaces of the PCIe card over the NTB to a defined target address space behind the NTB. If an application interface initiates a transaction to the NTB, the NTB checks the target address and origin ID (e.g. PCIe ID) according to a defined rule set (white list, for example). According to this rule set, the NTB decides whether to block the transaction or pass the transaction and translate the target address to the defined target address in the PCIe hierarchy on the other side of the NTB. The occurrence of such a blocking event can be monitored and reported back to the host system to take further actions. This rule set is accessible and configured through the management and control connection. The NTB opens an address window from one PCIe single root hierarchy to the other PCIe single root hierarchy. This procedure of the concept described monitoring and controlling transactions from the PCIe device(s) to the host system to achieve spatial separation like an IOMMU. Moreover, the concept can also be used in the opposite direction from the system host over the NTB to the PCIe device(s) and enforce spatial separation in this direction.

Furthermore, the ability to filter in both directions also allows realizing a filtering gateway. This concept can provide even more spatial separation features than an IOMMU can offer. However, one aspect of the description is to present a novel spatial separation concept based on non-transparent bridging technology providing the separation feature similar to an IOMMU. In addition, the bridge unit can do other checks as well. For example, another check could be a rate limitation for a source ID or a link between a source ID and a target ID or target address. This for example can be useful to prevent that an erroneous device disturbs or blocks a link.

Apart from that, the control unit in the bridge unit prevents that the processing unit receives counterfeit or falsified (message) signaled interrupts signals. One embodiment extends the doorbell interrupt mechanism. This mechanism consumes the interrupt on the first side of the bridge and newly generates the interrupt on the second side and transmits it to the processing unit. This procedure is extended by an additional decision using a rule set whether a device with a distinct device ID is allowed to trigger this interrupt or not. If a device is not allowed to trigger this interrupt, the interrupt is dismissed at the first side of the bridge and not newly generated at the second side. Another embodiment controls the forwarding of the interrupt in dependency of the rule set whether a device with a distinct device ID is allowed to trigger an interrupt similarly to the previously described procedure of data transactions. In contrast to this, interrupts are controlled in an especially reserved address range. This address range is monitored with a finer granularity (e.g. 32Bit instead of a typical granularity of a memory page of 4KB) and takes also the data of the interrupt message into account. With this means the interrupt can be controlled at the necessary detail for an interrupt trigger register in a typical interrupt controller. The interrupt can be forwarded and does not need to be recreated. The extended doorbell mechanism has the advantage of an implementation with lower complexity whereas the procedure with the finer granularity has the advantage of lower latency. In addition, the procedure with the finer granularity has the advantage that the maximum available amount of interrupts is not limited by the bridge unit (but only by the interrupt controller of the processing platform).

In one embodiment, the read and write data rate and transfer time of the IOMPU concept has a lower and therefore better transfer time value than software-based solutions.

The IOMPU concept is reusable and a standardized solution providing spatial separation. The concept does not require touching and changing the standardized PCIe protocol. Since the standardized PCIe protocol is not adapted, the solution is platform independent.

Compared to an IOMMU, the IOMPU concept may have additional advantages. Placing the IOMPU in a standardized I/O interconnect may offer a more general and portable solution than an IOMMU which is usually located closer to the system memory and is located between the I/O interconnect and the internal system on chip interconnect (usually a proprietary network-on-chip). Since IOMMUs are usually located farer away from the I/O device and closer to the system memory, the IOMPU concept located in the I/O interconnect provides an earlier spatial separation. In addition to this, the presented approach uses a physically dedicated control link and keeps the controlling rule set within the protection unit instead of the system memory. This is especially interesting for safety and security relevant systems since this offers a higher system availability and system security as well as predictable behavior, since no data need to be fetched from main memory.

It should be noted that the IOMPU concept does not require PCIe. Moreover, it can be applied to any memory-mapped I/O standard - for example also to sRIO.

Summarized, the IOMPU concept is practically applicable solution to provide spatial separation for mixed-criticality embedded real-time systems that do not have an IOMMU at all or have an IOMMU that is not able to distinguish multiple PCIe devices or PCIe devices with multiple functions.

The presented IOMPU concept provides practically applicable spatial separation for hardware-based I/O virtualization for mixed-criticality embedded real-time systems. The presented IOMPU concept achieves the spatial separation in a standardized way within the memory-mapped I/O interconnect instead of proprietarily and shortly before the system memory. A dedicated component - an IOMPU - rips up the single address space and I/O interconnect connection between I/O devices and the system host and divides the I/O interconnect address space and connection into two parts. One address space part and connection is exclusively used for management and control. The second address space part and connection is used for the actual data transactions. These two address spaces are connected non-transparently again by a nontransparent bridge (NTB). Data transactions are enforced to go over the NTB. In extension to standard NTBs, it is decided whether a transaction is blocked or allowed to pass. This decision is performed in dependency of a white-list rule-set checking the target address and origin ID.

The presented IOMPU may particularly be used for computing devices in security critical and safety critical environments, like for example avionics. However, it is applicable to other technical fields which have similar stringent safety and security requirements as automotive, railway and industrial control.

The presented IOMPU concept may also be used in virtual environments where a multitude of virtual machines, VM, are configured to access and share one physical I/O device, for example a network controller or any other unique physical I/O device. For example in the context of PCIe also a multifunction PCIe device or SR-IOV device. A respective bridge unit can be assigned to one of the virtual machines and respective ports of the processing unit in order to ensure that the I/O device transacts data to an allowed address space only.

### Brief description of the drawings

Below, exemplary embodiments of the invention are described with reference to the drawings.
- **Fig. 1**: illustrates a bridge unit according to an exemplary embodiment of the invention;
- **Fig. 2**: illustrates a computer device according to an exemplary embodiment of the invention;
- **Fig. 3**: illustrates a computer device according to an exemplary embodiment of the invention.

### Detailed description of exemplary embodiments

The drawings are schematic and not to scale. If in the following description similar reference signs have been used, they relate to similar or identical elements.

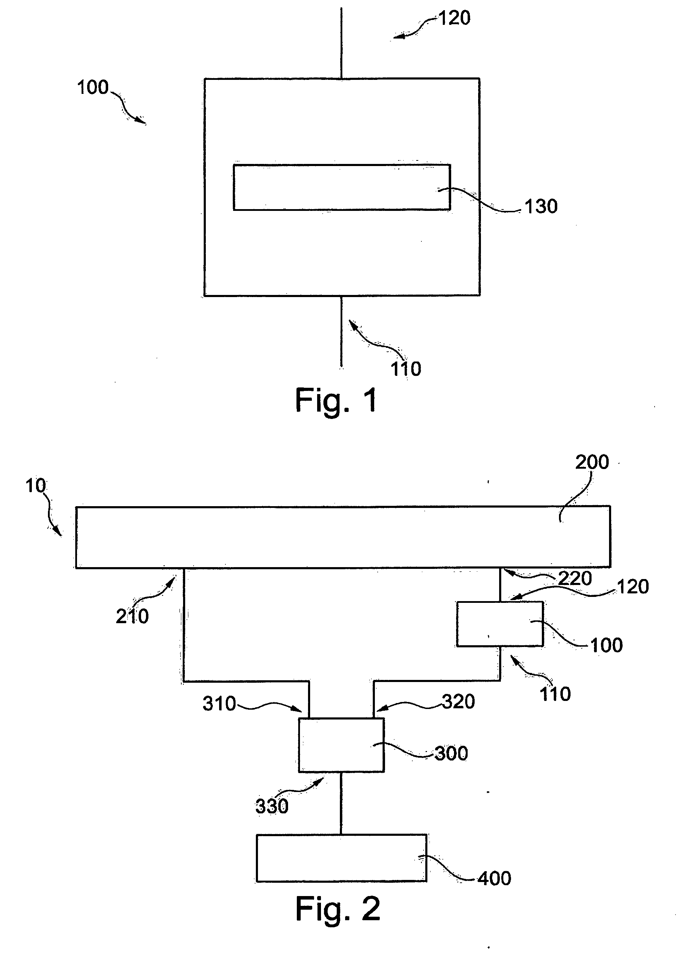

Fig. 1 illustrates a bridge unit 100 with a first interface 110, a second interface 120, and a control unit 130.

The first interface 110 is assigned to a first address space for receiving or transmitting data packets. The second interface 120 is assigned to a second address space for transmitting or receiving data packets. The control unit is configured for applying a set of rules with at least one rule to data packets received at one of the first and second interfaces.

The first interface 110 may be configured for being connected to an I/O device and the second interface 120 may be configured for being connected to a processing unit of a computer device. If the I/O device transmits a data packet to the processing unit via the bridge unit 100, the data packet first reaches the first interface 110. The bridge unit may subsequently determine a respective address of the second address space belonging to the data packet. The control unit checks the ID of the I/O device, the first address and the second address. If the I/O device with the respective ID is allowed to transmit data packets to the respective addresses, the control unit allows the data packet to pass, otherwise the data packet is dismissed or rejected.

Fig. 2 illustrates a computer device 10 with a processing unit 200, an I/O device 400, a switching unit 300, and a bridge unit 100.

The processing unit may for example be a central processing unit, CPU, of a computer device and may be adapted for executing one or more processes which are adapted for exchanging data with one or more I/O devices. The processing unit 200 comprises a multitude of ports of which a first port 210 and a second port 220 are shown.

The first port 210 is adapted for configuration transactions with the I/O device 400 and the bridge unit 100 via the switching unit 300. In other words, the processing unit 200 transmits and receives configuration information to the or from the I/O device and the bridge unit via the first port.

The second port 220 is adapted for data transaction with the I/O device 400, i.e., data packets transmitted from the I/O device to the processing unit or vice versa are transmitted or received via the second port.

The switching unit 300 is configured for separating between configuration transaction and data transaction such that the respective transactions are lead to the assigned ports 210, 220 via the first interface 310 and the second interface 320, respectively, of the switching unit 300.

The bridge unit 100 is arranged between the switching unit 300 and the second port 210 of the processing unit 200 such that data packets of the data transaction can be analyzed and the rules of the configuration unit can be applied to the transmitted data packets in order to determine whether or not a data packet from a given I/O device is allowed to be transmitted to the provided target address.

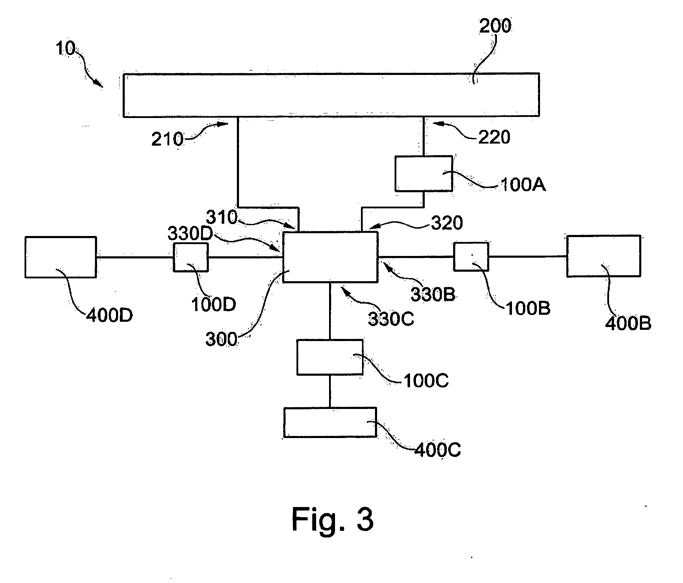

Fig. 3 illustrates a computer device 10 similar to that shown in Fig. 2. Therefore, the differences will be described in the following.

The computer device 10 of Fig. 3 comprises a multitude of I/O devices 400B, 400C, 400C (in this case three) each of which is connected to an interface 330B, 330C, 330C of the switching unit 300.

A bridge unit 100B, 100C, 100D is arranged between each of the I/O devices and the interface of the switching unit in addition to the bridge unit 100A arranged between the switching unit 300 and the second port 220 of the processing unit 200.

In this computer device 10, data packets of a data flow between two I/O devices, for example 400D to 400B, can be analyzed by the bridge units 100D and/or 100B even if the data flow does not involve the processing unit 200, for example in a DMA-configuration.

Thus, an access control of one I/O device to the memory or to an address of another I/O device can be checked.

In the configuration shown in Fig. 3, when initializing the computer device (power up or switch on) it may be required to initialize the bridge units 100B, 100C, 100D with a default rule set in order to allow a configuration transaction from the processing unit 200 to any one of the I/O devices 400B, 400C, 400D in order to configure these I/O devices for data transaction with each other and with the processing unit. Such an initialization of the bridge units may in particular be required in case the bridge units are configured such that a data flow is not permitted in a default state of the bridge units.

### List of reference signs

- 10: computer device
- 100: bridge unit
- 110: first interface
- 120: second interface
- 130: control unit
- 200: processing unit
- 210: first port
- 220: second port
- 300: switching unit
- 310: first interface
- 320: second interface
- 330: third interface
- 400: I/O device

## Claims

1. Bridge unit (100) for transmitting a data packet between an I/O device (400) and a processing unit (200), comprising:
a first port (110) configured to send and receive a data packet using a first address space;
a second port (120) configured to send and receive a data packet using a second address space;
wherein one port of the first port (110) and second port (120) is configured for being connected to the I/O device (400) and the other port is configured for being connected to the processing unit (200);
wherein the bridge unit (100) comprises a control unit (130) which is adapted to transmit a data packet from one of the first port (110) and the second port (120) to the other port;
wherein the control unit (130) is configured to apply a set of rules comprising at least one rule to the data packet;
wherein the control unit (130) is configured to verify an identifier, ID, of the I/O device when applying the set of rules to the data packet and to dismiss the data packet if no rule of the set of rules applies to the data packet.

2. Bridge unit (100) according to claim 1,
wherein the control unit (130) is further configured to verify an address relating to the first address space and an address relating to the second address space when applying the set of rules to the data packet.

3. Bridge unit (100) according to claim 1 or 2,
wherein the bridge unit is a non-transparent bridge.

4. Bridge unit (100) according to any one of the preceding claims,
wherein the control unit (130) is configured to masquerade an address of the first address space.

5. Bridge unit (100) according to any one of the preceding claims,
wherein the control unit (130) is configured to apply a second set of rules comprising at least one rule to an interrupt signal received at one of the first and second interface (110, 120).

6. Computer device (10), comprising
a processing unit (200),
an I/O device (400), configured for exchanging data packets with the processing unit (200);
a switching unit (300), configured for connecting the I/O device to the processing unit; and
a bridge unit (100) according to one of the preceding claims;
wherein the bridge unit (100) is arranged between the switching unit (300) and the processing unit (200) and is configured for verifying data packets transmitted from one of the I/O device (400) and the processing unit (200) to the other one of the I/O device (400) and the processing unit (200).

7. Computer device (10) according to claim 6,
wherein the processing unit (200) comprises a first port (210) and a second port (220);
wherein the first port (210) is configured to perform configuration transactions; wherein the second port (220) is configured to perform data transactions.

8. Computer device (10) according to claim 6 or 7,
wherein the switching unit (300) is configured to separate configuration transactions from data transactions and to transmit only configuration transactions from the first port (210) of the processing unit (200) and only data transactions to the second port (220) of the processing unit.

9. Computer device (10) according to claim 7 or 8,
wherein the bridge unit (100) is arranged between the switching unit (300) and the second port (220) of the processing unit (200).

10. Computer device (10) according to any one of claims 6 to 9,
wherein the switching unit (300) is configured to replace a source ID of a data packet received from the I/O device (400) with an ID of an interface (330) of the switching unit (300) connected to the I/O device (400).

11. Computer device (10) according to any one of claims 6 to 10,
further comprising a second bridge unit (100B, 100C, 100D) according to any one of claims 1 to 5;
wherein the second bridge unit (100B) is arranged between the I/O device (400) and the switching unit (300).

12. Computer device (10) according to claim 11,
wherein the second bridge unit (100B, 100C, 100D) is configured to apply a set of rules to data packets sent from one of the I/O device to the switching unit to the other one.

13. Computer device (10) according to claim 11 or 12,
wherein the second bridge unit is configured to be provided with a default set of rules after an initialization of the computer device such that a configuration transaction from the processing unit (200) to the I/O device (400) is permitted.

14. Computer device (10) according to any one of claims 6 to 13,
further comprising a multitude of second I/O devices (400B, 400C, 400D);
wherein any one of the multitude of second I/O devices is connected to the switching unit (300) via a third bridge unit (100B, 100C, 100D) according to any one of claims 1 to 5.

15. Computer device (10) according to claim 14,
wherein one of the third bridge units (100C) connected to one of the second I/O devices (400C) is configured such that a set of rules is applied to a data packet originated from one of the other second I/O devices (400B, 400D).
